# EUROPEAN PATENT APPLICATION

(11) **EP 1 650 652 A1**
(43) Date of publication of application: **26.04.2006**
(21) Application number: 04300705.3
(22) Date of filing: 21.10.2004
(51) Int. Cl.: G06F 9/445

(54) **Improved file transfer**

(71) Applicant: Hewlett-Packard Development Company, L.P., Houston, Texas 77070 (US)
(72) Inventor: Caradec, Jean-Philippe, 38180, Seyssins (FR)
(74) Representative: Lloyd, Richard Graham

(57) **Abstract**

According to one aspect of the present invention, there is provided a method of transferring a data file stored on a first storage device to a second storage device, the contents of the first storage device being accessible to a computing device having access to the second storage device, comprising at the computing device: retrieving a destination identifier pre-stored on the first storage device indicating the intended destination on the second storage device to which the data file is to be transferred; and transferring the data file to the intended destination.

## Description

The present invention relates generally to storage devices, such as the removable storage devices commonly used in mobile electronic devices such as digital cameras, and particularly to a method and system for transferring data stored on such storage devices to other storage devices.

In recent years the number of electronic devices using non-volatile storage devices such as memory cards has increased at a tremendous rate. Now, the majority of digital cameras use such memory cards, as do increasing numbers of mobile telephones, personal digital assistants, personal music players and the like. Such memory cards exist in a variety of different formats and are marketed under names such as CompactFlash, Secure Digital, SmartMedia, MultimediaCard. Memory cards are currently available in a variety of different capacities ranging from the several megabytes, up to many gigabytes.

Memory cards are typically formatted to have a file structure similar to that used by many personal computers, such as FAT or NTFS, enabling digital content in the form of data files to be stored on the cards.

Digital cameras, for example, use memory cards to store photographic images in data files. Each time a photograph is taken and stored, the remaining space available on the memory card decreases. When there is no longer sufficient available space on the memory card it is no longer possible to take further photographs until adequate space is made available.

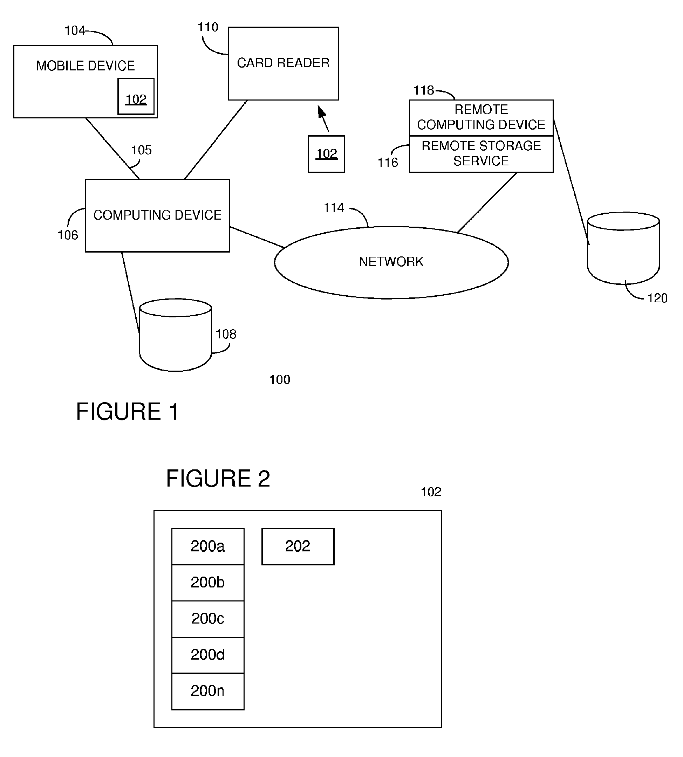

In order to free up space on a memory card, a user typically has to delete data files stored on the memory card, or has to transfer the stored data files to a storage device remote from the mobile device, thereby enabling the data files on the card to be subsequently deleted. Currently users have two main data transfer options. The first is to transfer the data files stored on their memory card to a personal computer for storage, for example on a local hard disk or other suitable storage device. The second is for the user to transfer the data files to a remote storage device, typically accessible via a network such as the Internet. Both of these cases are described below with reference to Figure 1, which shows a block diagram of a typical system 100 according to the prior art.

The system 100 depicts a computing device 106, such as a personal computer or a publicly accessible computer terminal, having an associated local storage device 108 such as a hard disk drive. The computing device 106 has access to a network 114, such as the Internet, and through the network 114 the computing device 106 may communicate with a remote storage service 116 hosted by a remote computing device 118. The remote computing device 118, such as a computer server, has an associated storage device 120 which may be a local storage device (as shown), or alternatively may also be geographically remote therefrom and accessible via a suitable network (not shown).

Also shown is a mobile device 104, such as a digital camera, having a memory card 102 on which data files are stored. A user of the mobile device 104 makes use of the computing device 106 to transfer data files stored on the memory card 102 either to the storage device 108 or to the remote storage device 120.

In order to be able to perform such a transfer, the user of the mobile device 104 has to make the contents of the memory card 102 available to the computing device 106, so that the computing device 106 can perform the transfer.

There are currently two main ways in which this may be achieved. The first is to connect the mobile device 104 containing the memory card 102 to the computing device 106 via a connection 105. The connection 105 may be a wire connection, such as a USB, serial or parallel cable, or alternatively the connection may be a wireless connection such as a Bluetooth, 802.11, infra-red or other suitable wireless connection. The connection 105 is such that the computing device 106 may freely access the contents of the memory card 102, and may perform read, write and delete operations.

If the mobile device 104 does not support such a connection 105, the user may alternatively use a memory card reader 110 which is connected to the computing device 106. The user removes the memory card 102 from the mobile device 104, inserts the memory card 104 into the memory card reader 110 thereby enabling the computing device 106 to freely access the contents of the memory card 102 and perform read, write and delete operations.

Depending on the operating system and software applications installed on the computing device 106, the actions effected when the computing device 106 gains access to the contents of the memory card 102 may vary, as outlined below.

For example, in some cases the memory card 102 will appear as a local storage drive available to the operating system 106. In this case, a user wishing to transfer data files stored on the memory card 102 has to locate and execute a suitable file exploration application, has to locate the memory card 102 from the list of available storage devices, has to select the data files which are to be transferred, has to locate and select the intended destination location, such as a suitable file directory on the local storage device 106, and finally has to instruct the computing device to carry out the transfer, for example by dragging and dropping the selected data files to the selected destination.

Alternatively, if the user wishes to transfer the data files to the remote storage device 120, the user typically has to execute a suitable Internet browser application, to enter the URI of the web-based remote storage service 116, to navigate to the appropriate web page of the remote storage service 116, to enter an appropriate user identification and password, to access the user's personal account at the remote storage service, to locate the intended destination within the user's personal account, to locate the memory card 102 from the list of available storage device accessible to the computing device 106, to select the data files for transferring to the remote storage device 118, and to instruct the computing device 106 to carry out the transfer. Finally, the user may, through use of a suitable file exploration application, may delete the data files transferred, preferably after having verified that the transfer to the remote storage device 118 was performed successfully.

To simplify the above-mentioned processes, it is known to provide a 'wizard' or other suitable software application to assist in the transfer of data files. Such wizards are typically provided by the manufacturer of the mobile device and are often specially designed for exclusive use with the particular mobile device concerned. Such wizards are typically installed by the user on a personal computer on which the user wishes to store their data files. Generic wizards may also be included as part of a computer operating system.

Some wizards often use small computer programs executed as background tasks by the operating system, which enable the wizard to be executed automatically when a memory card is made available to the computing device 106. Other wizards are designed to be manually executed by the user.

A typical user of a mobile device 102, such as a digital camera, also owns a personal computing device, such as a personal computer, on which the user stores and manages all files or images created by the user. This gives the user a secure and private environment in which such files may be stored. Accordingly, since such wizards are typically installed on a personal computer used exclusively by the user of the mobile device 102, the wizards may be used to store personal user preferences such as the preferred location on the local storage device 108 where data files should be transferred to.

However, since such wizards store preference information locally on the computing device on which they are installed, a user is unable to take advantage of the wizard when using a computing device on which such a wizard is not installed. A user is also unable to take advantage of such a wizard when using a computing device on which a wizard is already installed but which stored personal preferences of a different user.

This is problem frequently encountered by travellers who may not have access to their own computing device when away from home, and thus typically must rely on public computing devices to carry out the transfer of data files from their memory cards to a remote storage device such as remote storage device 120. In other situations, users having a personal computer having a slow Internet connection may prefer performing the transfer to the remote storage device 120 using a friends or business computing device having a faster Internet connection. In other situations, the user of a mobile device may simply not possess a computing device, and thus be reliant on accessing the remote storage service 116 using public or other non-personal computing devices.

However, whilst the transferring of data files from memory cards to remote storage devices is an operation which is performed frequently by users, especially by users of digital cameras, current methods of performing such transfers require substantial manual intervention by the user as well as requiring users to have a certain degree of computer knowledge or familiarity in order to perform such a transfer. Furthermore, users are typically required to remember a great detail of information in order to allow them to perform the transfer successfully. For example, a user transferring data files to a remote storage service will typically have to remember the URI of the web site hosting or giving access to the storage service, a user id and password or other suitable authentication information, a location on the remote storage server where such data files are to be stored and so on.

Given that generally the functionality of digital cameras and other mobile devices is becoming evermore user friendly, many users may feel somewhat let-down by the perceived difficulty that is involved in successfully transferring data files from a memory card to a remote storage device. This may result in a reduced customer experience when using mobile devices having memory cards. Not only is this undesirable from a customer perspective, since some customers may feel disillusioned and disappointed by the relative complexity of performing what many users feel should be a simple file transfer, but from a manufacturers perspective such negative customer feelings may result in increased calls to support centres and even loss of sales.

Accordingly, one aim of the present invention is to overcome or alleviate at least some of the above-mentioned problems.

According to a first aspect of the present invention, there is provided a method of transferring a data file stored on a first storage device to a second storage device, the contents of the first storage device being accessible to a computing device having access to the second storage device, comprising at the computing device: retrieving a destination identifier pre-stored on the first storage device indicating the intended destination on the second storage device to which the data file is to be transferred; and transferring the data file to the intended destination.

Advantageously this simplifies the task of transferring data files from the memory card to a preferred storage medium.

The step of retrieving a destination identifier may be adapted to retrieve a destination identifier identifying a storage device local to the computing device.

The step of retrieving a destination identifier may also be adapted to retrieve a destination identifier identifying a storage device remote to the computing device. The destination identifier in this case may be in the form of a universal resource indicator (URI).

The step of retrieving may also comprise retrieving a pre-stored device identifier. It may then be determined whether the retrieved device identifier matches an identifier of the computing device. If a match is determined, the data file may be transferred to the identified local storage device. If no match is determined the data file may be transferred to the storage device remote to the computing device.

Suitably the step of retrieving further comprises retrieve authentication data for authenticating a user at the remote storage device, and supplying the retrieved authentication data to the remote storage device prior to effecting the transfer.

Suitably the step of retrieving further comprises retrieving data indicative of one or more data files not to be transferred, the step of transferring being adapted not to transfer any data files so indicated.

Preferably the data file is deleted from the first storage device upon verification that the transfer was successful.

The first storage device may be a non-volatile memory card.

According to a second aspect, there is provided a storage device operable for storing one or more data files thereon. The storage device comprises a destination identifier indicative of an intended location to which the one or more data files are to be transferred when the contents of the memory card are made available to a computing device having access to the intended location.

Suitably the destination identifier identifies a location on a storage device local to the computing device. The destination identifier may also identify a location on a storage device remote to the computing device.

The storage device may further comprise a computing device identifier.

The storage device may further comprise user authentication data.

The storage device may further comprise a computer program operating for effecting the transfer of a data file as described above.

The storage device may suitably be a non-volatile memory card.

According to a third aspect of the present invention, there is provided a computing device operable for accessing the contents of a storage device for storing content data files thereon, the computing device including means for storing on the memory card data such that the is suitable for use with the above method.

According to a fourth aspect, there is provided a computer program for execution by a computing device having access to a storage device, operating in accordance with the above method.

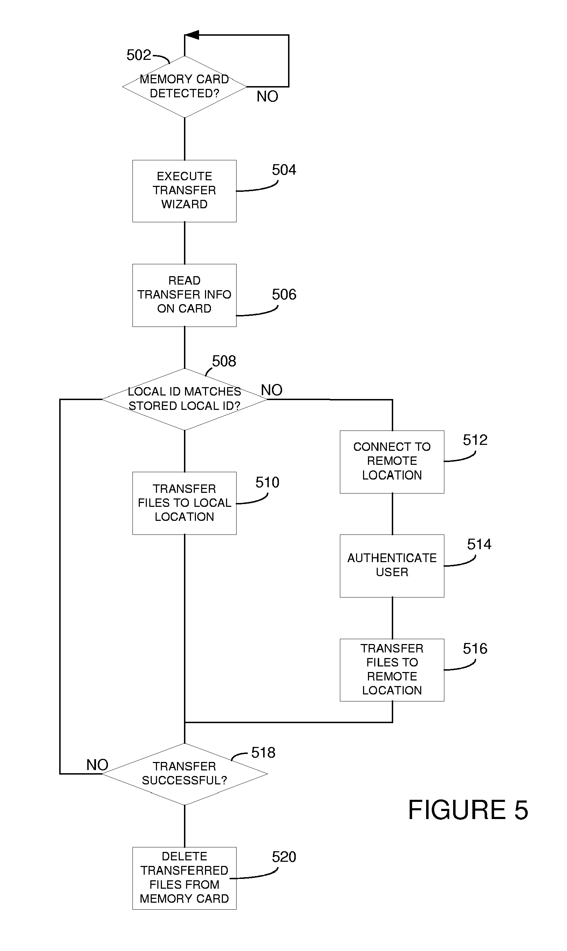

Embodiments of the present invention will now be described. The present embodiments make use of the existing conventional elements of the system 100 as described above with reference to Figure 1 with the addition of a new transfer wizard or software application (not shown) and new additional data 202 stored on the memory card 102, as is described below in more detail, with reference to Figures 2, 3, 4 and 5. A new mobile device 104 is also provided to assist the user in storing the additional data on the memory card 102.

The additional data 202 contains details of a preferred location to which the data files 200a to 200n are to be transferred when the contents of the memory card 102 are made available to the computing device 106.

Generally, when the memory card is made available to the computing device 106 (step 400), the new wizard is executed (step 402). Preferably the new wizard is executed automatically upon detection of the memory card, or alternatively the user may manually execute the new wizard. The new wizard reads the data 202 from the memory card 102 (step 404) and determines from the data 202 a location to which the data files 200a to 200n are to be transferred. The new wizard carries out the transfer (step 406) in accordance with the data 202. Upon successful transfer (step 408), the new wizard preferably deletes (step 410) the transferred data files 200a to 200n from the memory card 102.

In a first embodiment the data 202 contains a file location in the local storage device 108 to where the data files 200a to 200n are to be transferred. Such a location may take the form of a file path, such as:
c:\personal_data\My_Photos\

The location data may be stored on the memory card 102 as a suitable text file

Thus, when the computing device 102 detects that it is able to access the contents of the memory card 102 (step 400), the new wizard is executed (step 402), the data 202 read from the memory card 102 (step 404), and the data files 200a to 200n present on the memory card are transferred to the indicated location (step 406). Finally, the data files 200a to 200n are deleted upon successful transfer (steps 408 and 410).

In a second embodiment, the data 202 may include additional data such as personal computing device identifier and a file location to which data files stored on the memory card 102 are to be transferred if the identity of the computing device 106 matches that contained in the data 202. In this way, if the user of a memory card 102 inserts their memory card into a computing device other than, for example, their own personal computer, the transfer of their images does not take place automatically.

In a third embodiment, the data 202 may include data identifying the location of the remote storage service 116 through which data files 200a to 200n may be transferred to the remote storage device 120. The data 202 may, for instance, include a universal resource indicator (URI) or the remote storage service 116, such as:
http://www.hp.com/PhotoStore

The data 202 may additionally include user authentication information, such as a user identifier and password that the user would normally use to authenticate himself with at the remote storage service 116. Thus, upon the new wizard gaining access to the contents of the memory card 102, the data 202 is read from the memory card, a connection is made with the remote storage service 116, the user is authenticated at the remote storage service 116 through use of the user identifier and password contained in the data 202, and the transfer of the data files 200a to 200n to remote storage device 120 is carried out. The transferred data files 200a to 200n are then deleted.

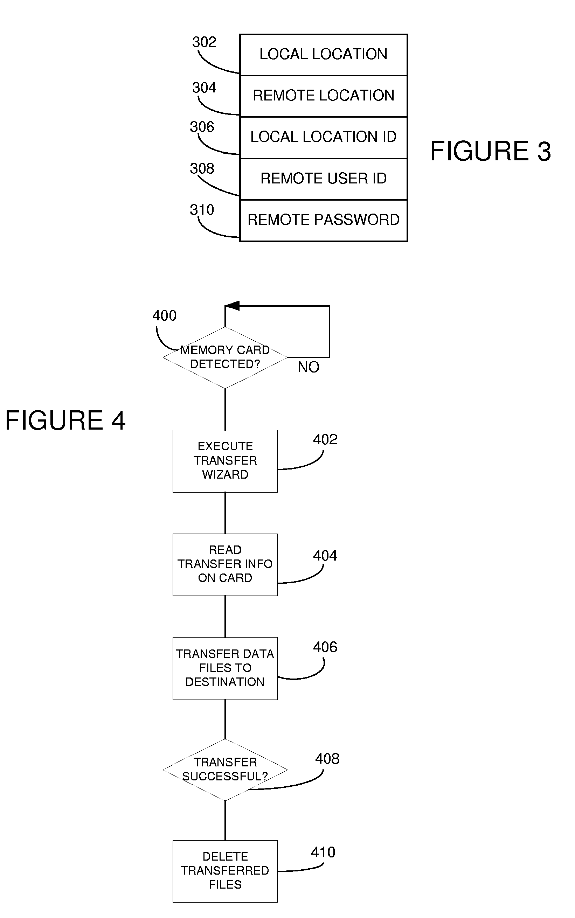

In a fourth embodiment the data 202 includes, as shown in Figure 3, local location data 302 indicating a preferred destination on a local storage device, remote location data 304 indicating a preferred destination on a remote storage device, local location identifier data 306, remote user identifier data 308, and a remote password 310. When the computing device 106 gains access to the contents of the memory card 102, (step 502), the new wizard is executed (step 504). The new wizard reads the data 202 from the memory card 102 (step 506) and determines whether the local location identifier 306 matches a local location pairing identifier on the computing device 106. The local location identifier could be, for example, the serial number of the microprocessor of the computing device 106, the formatted name of a hard drive of the computing device 106, or any other substantially unique identifier. If the local identifiers match (step 508), the new wizard effects the transfer of the data files 200a to 200n to the location on the local storage device 108 identified by the local location data 302. In this way, if the owner of the memory card 102 inserts the card into the computing device with which the memory card is paired, the data files 200a to 200n will automatically be transferred to the local storage device 106. The local location identifier 306 may additionally contain the identify of other computing devices which are paired for used with the memory card 102.

If the local location identifier does not match that of the computing device 106 (step 508), this indicates that the owner of the memory card 102 is using a computing device which is not paired with the memory card 102, indicating, for example, that the user may be using a public computing device. In this case, the new wizard attempts to connect to the remote location (step 512) indicated in the remote location data 304. If the connection is successful, the new wizard supplies a remote user identifier 308 and a remote user password 310 to the remote location to authenticate the user (step 514). Once the user has been authenticated, the data files 200a to 200n may be transferred to the remote location (step 516). The transfer to the remote location may take place using the file transfer protocol (FTP) or any other suitable file transfer mechanism.

Upon successful transfer of the data files 200a to 200n to the either the local location or the remote location (step 518) the transferred data files may be deleted (step 520). However, the data 202 should not be deleted along with the data files. This may be achieved, for example, by arranging for the new wizard to only transfer data files having certain file extensions. As a further level of protection of the data 202 it may be preferable for the data 202 to be stored in a hidden file or a hidden directory within the memory card 102.

Where the data stored on the memory card 102 contains data files which are not intended to be transferred and deleted from the memory card 102, preferably the data 202 includes details of such data files. For example, the data 102 may additionally include a list of one or more file names or directories on the memory card 102 which are not to be transferred.

In a yet further embodiment, in addition to the user data 302 it is further proposed to additionally store a suitable transfer wizard software application on the memory card 102. In this case, the wizard resident on the computing device 106 only has to detect the presence of the memory card 102 and to download the transfer wizard stored on the memory card 102 to the computing device 106. The wizard on the computing device 106 executes the downloaded wizard which effects the transfer process in accordance with any of the above-described embodiments.

In further embodiments the new wizard may modify the intended location of the data files, for example by adding data sensitive information to the intended location. For example, if the local location 302 of data 202 is:
c:\personal\myphotos\

The new wizard may store a data file having a creation date of January 2004 in the location:
c:\personal\myphotos\January 2004\

Suitably, if such a directory does not exist, the new wizard preferably creates the directory prior to transferring the data files.

In a still further embodiment, a new mobile device (not shown) is provided which assists the user in creating the data 202 stored on the memory card 102. Typically mobile devices enable a user to format a memory card to ensure that the formatting of the memory card is compatible with the mobile device. In the present embodiment, as part of the formatting process the mobile device requests data from the user such as a user ID, a URI of a remote storage service, and so on. The user may, for example, enter such information using the data entry means generally provided on the mobile device. Once this information has been entered, the mobile device creates the data 202 and stores it accordingly on the memory card 102. Alternatively, the new wizard may enable the user to store the data 202 on the memory card 102.

In a yet still further embodiment, during the formatting of the memory card 102, the mobile device may request that the user enter a user ID obtained during a product registration step performed by accessing a web site provided by the manufacturer of the mobile device. For instance, when a memory card 102 is first formatted, the mobile device may retrieve an internally stored and substantially unique mobile device identification number which is presented to the user. The user may be required to access the manufacturer's web site and to enter the device identification number. The web site may subsequently request information relating to the customer, such as name, address and personal preferences. The registration step may result in a remote storage account being created on the manufacturer's web site through which the user may store data files. The mobile device requests the generated user ID which the user enters using the data input means of the mobile device. Preferably the generated user ID is sufficient to uniquely identify the user.

In the above-described embodiments it is preferable that the transfer of data files stored on the memory card 102 is effected automatically when the contents of the memory card 102 are made available to a computing device having the new wizard executed thereon.

Those skilled in the art will appreciate that secure transfer mechanisms could be employed if required. For example, suitable use of encryption, passwords or certificates, or the like, may be used without detracting from the inventive concepts described herein.

As it can be seen from the above-described example embodiments, the task of transferring data files from a memory card to a remote storage device is substantially simplified for the user, especially for users who are not particularly computer literate. By providing such a system and method, users are provided with a simply and substantially fool-proof way of transferring data files to a remote storage device to free up space on memory cards. Not only does this encourage users to make greater use of mobile devices that use memory cards, such as digital cameras, but it also encourages greater use of third party remote storage services, such as web-based photographic development and photo sharing services.

Those skilled in the art will understand that the methods, systems and apparatus described above are not limited for use with memory cards, and the same or similar techniques may equally be applied to other suitable storage devices, such as floppy disks, hard disks and the like.

## Claims

1. A method of transferring a data file stored on a first storage device to a second storage device, the contents of the first storage device being accessible to a computing device having access to the second storage device, comprising at the computing device:
retrieving a destination identifier pre-stored on the first storage device indicating the intended destination on the second storage device to which the data file is to be transferred; and
transferring the data file to the intended destination.

2. The method according to claim 1, where the step of retrieving a destination identifier is adapted to retrieve a destination identifier identifying a storage device local to the computing device.

3. The method according to claim 1 or 2, where the step of retrieving a destination identifier is adapted to retrieve a destination identifier identifying a storage device remote to the computing device.

4. The method according to claim 3, wherein the step of retrieving the destination identifier is adapted to retrieve the destination identifier in the form of a universal resource indicator.

5. The method according to claim 1, 2, 3 or 4, wherein the step of retrieving further comprises retrieving a pre-stored device identifier, the method further comprising:
determining whether the retrieved device identifier matches an identifier of the computing device, and transferring the data file to the identified local storage device where a match is determined.

6. The method according to claim 3, 4 or 5, wherein the step of determining further comprises, where it is determined that the retrieved device identifier does not match the identifier of the computing device, transferring the data file to the storage device remote to the computing device.

7. The method according to claim 5 or 6, wherein the step of retrieving further comprises retrieve authentication data for authenticating a user at the remote storage device, the method comprising:
supplying the retrieved authentication data to the remote storage device prior to effecting the transfer.

8. The method according to claim 4, 5, 6 or 7, wherein the step of retrieving further comprises retrieving data indicative of one or more data files not to be transferred, the step of transferring being adapted not to transfer any data files so indicated.

9. The method according to claim 4, 5, 6, 7 or 8, further comprising:
deleting from the first storage device the data file upon verification that the transfer was successful.

10. The method according to any previous claim adapted for use where the first storage device is a non-volatile memory card.

11. A storage device operable for storing a data file thereon, comprising:
a destination identifier indicative of an intended location to which the data file is to be transferred when the contents of the memory card are made available to a computing device having access to the intended location.

12. A storage device according to claim 11, wherein the destination identifier identifies a location on a storage device local to the computing device.

13. A storage device according to claim 11 or 12, wherein the destination identifier identifies a location on a storage device remote to the computing device.

14. A storage device according to claim 11, 12, or 13, further comprising a computing device identifier.

15. A storage device according to claim 11, 12, 13 or 14, further comprising user authentication data.

16. A storage device according to any of claims 11 to 15, further comprising a computer program operating in accordance with any of claims 1 to 9.

17. A storage device according to any of claims 11 to 16, wherein the storage device is a memory card.

18. A computing device operable for accessing the contents of a storage device for storing a data file thereon, the computing device including means for storing data on the storage device such that the data file may be subsequently transferred in accordance with any of claims 1 to 9.

19. A computer program for execution by a computing device having access to a storage device, operating in accordance with any of claims 1 to 9.
